# EUROPÄISCHE PATENTSCHRIFT

(11) **EP 2 094 419 B1**
(45) Veröffentlichungstag und Bekanntmachung des Hinweises auf die Patenterteilung: **11.01.2012**
(21) Anmeldenummer: 07788084.7
(22) Anmeldetag: 31.07.2007
(51) Int. Cl.: B23B 51/02, B28D 1/14, E21B 10/44

(54) **GESTEINSBOHRER**
ROCK DRILL
FORET À PIERRE

(30) Priorität: 28.09.2006 DE 102006045918
(43) Veröffentlichungstag der Anmeldung: 02.09.2009
(73) Patentinhaber: Robert Bosch GmbH, 70442 Stuttgart (DE)
(72) Erfinder: DUSCHA, Helmut, 88212 Ravensburg (DE); RIEGER, Wolfgang, 88250 Weingarten (DE)
(86) Internationale Anmeldenummer: PCT/EP2007/057889
(87) Internationale Veröffentlichungsnummer: WO 2008/037527

(56) Entgegenhaltungen:
- WO-A-01/88321
- DE-A1- 2 735 855
- DE-A1- 10 053 344

## Beschreibung

Die Erfindung betrifft einen Gesteinsbohrer gemäß dem Oberbegriff des Anspruchs 1.

### Stand der Technik

Aus der WO 2001/088321 A1 ist ein Gesteinsbohrer für eine drehende und schlagende Beanspruchung, mit einem Bohrerkopf, einer Förderwendel, einem Einspannschaft und einer Bohrerlängsachse bekannt, wobei der Bohrerkopf wenigstens ein Nebenschneidelement mit einer vorderen und einer hinteren Seitenfläche aufweist, wobei das Nebenschneidelement einen Massenschwerpunkt und eine Schneidkante aufweist, wobei der Massenschwerpunkt und die Scheidkante eine erste Ebene definieren, wobei die fordere Seitenfläche des Nebenschneidelements eine zweite Ebene definiert und wobei die hintere Seitenfläche des Nebenschneidelements eine dritte Ebene definiert. Ein derartiger Gesteinsbohrer soll bezüglich der Standzeit seiner Nebenschneidelemente bzw. Nebenschneidplatten verbessert werden.

Der Erfindung liegt die Aufgabe zugrunde, einen Gesteinsbohrer zu entwickeln, bei welchem das bzw. die Nebenschneidelemente eine erhöhte Standzeit aufweisen.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Der erfindungsgemäße Gesteinsbohrer weist eine Bohrerlängsachse auf, welche die erste Ebene in einem ersten Schnittpunkt schneidet und welche die zweite Ebene und/oder die dritte Ebene in einem zweiten bzw. dritten Schnittpunkt schneidet, wobei die Bohrerlängsachse und die erste Ebene in Vorschubrichtung des Gesteinsbohrers einen ersten spitzen Winkel einschließen und wobei die Bohrerlängsachse und die zweite Ebene und/oder die dritte Ebene in der Vorschubrichtung des Gesteinsbohrers einen zweiten und/oder dritten spitzen Winkel einschließen. Durch eine derartige Ausrichtung des Nebenschneidelements in Richtung der im Bohrbetrieb auf das Nebenschneidelement wirkenden resultierenden Kraft, welche sich im wesentlichen aus einer durch den Hammerimpuls des Gesteinsbohrers erzeugten axialen Komponente und einer durch die Rotation des Gesteinsbohrers erzeugten tangentialen Komponente zusammensetzt, lässt sich die Standzeit des Nebenschneidelements bei unveränderter Dimensionierung erheblich erhöhen, in dem die oben beschriebene, resultierende Kraft in Richtung des Masseschwerpunktes des Nebenschneidelementes geleitet wird. Kern der Erfindung ist somit eine räumliche Ausrichtung des Nebenschneidelements auf die im Hammerbohrbetrieb auf das Nebenschneidelement wirkende Kraft. Die Standzeiterhöhung wird hierbei durch ein Kippen des Schneidelements aus der Vorschubrichtung erreicht, wobei das Schneidelement durch eine schräge Einbettung an der vorderen und/oder der hinteren Seitenfläche derart gekippt wird, dass der Massenschwerpunkt des Schneidelements auf einem Kraftvektor liegt, welcher die Schneidkante durchläuft.

Die Erfindung sieht vor, die erste Ebene in einem Winkel (α1) von etwa 10° bis 25° zu der Bohrerlängsachse auszurichten. Hierdurch ist eine optimale Ausrichtung des Nebenschneidelements bei allen herkömmlichen Belastungssituationen möglich.

Weiterhin sieht die Erfindung vor, die zweite Ebene und/oder die dritte Ebene in einem Winkel (α2, α3) von etwa 5° bis 20° zu der Bohrerlängsachse auszurichten. Hierdurch ist eine optimale Grobausrichtung des Nebenschneidelements möglich.

Erfindungsgemäß ist der Winkel (α1) zwischen der ersten Ebene und der Bohrerlängsachse größer als der Winkel (α2, α3) zwischen der zweiten Ebene und/oder dritten Ebene und der Bohrerlängsachse. Durch diese Winkeldifferenz wird ein Ausschlagen des Nebenschneidelements aus der Nut, in der es gehalten ist, vermieden, da jeder Schlag, welchen das Nebenscheidelement im Betrieb erfährt, eine bremsend oder sperrend wirkende Verkantung des Nebenschneidelements in der Nut hervorruft.

Weiterhin sieht die Erfindung eine Positionierung des Nebenschneidelements vor, bei welcher der erste Schnittpunkt in der Vorschubrichtung des Gesteinsbohrers vor dem Massenschwerpunkt liegt und bei welcher insbesondere der erste Schnittpunkt zwischen einer Bohrerspitze und dem Massenschwerpunkt liegt. Hierdurch ist ein kompakter Aufbau des Bohrerkopfes gewährleistet.

Weiterhin sieht die Erfindung vor, in der Drehrichtung des Gesteinsbohrers vor der Schneidkante des Nebenscheidelements einen Abfuhrkanal für Bohrmehl anzuordnen, welcher von einer Stirnseite des Bohrerkopfes in die Förderwendel führt. Hierdurch ist eine gute Bohrklein- bzw. Bohrmehlabfuhr vor dem effektiv arbeitenden Nebenschneidelement gewährleistet.

Die Erfindung sieht auch vor, das Nebenscheidelement in eine an dem Bohrerkopf ausgebildete Nut einzubetten. Hierdurch ist eine einfache und effektive Befestigung des Nebenschneidelements möglich.

Erfindungsgemäß definieren Seitenflanken der Nut eine vierte und eine fünfte Ebene, welche mit der Bohrerlängsachse einen vierten und fünften Schnittpunkt aufweisen. Durch eine derartige schräge Ausrichtung der Nut ist eine erfindungsgemäße Ausrichtung bzw. Positionierung bekannter Schneidelemente möglich.

Weiterhin sieht die Erfindung vor, die Nebenschneidelemente spiegelsymmetrisch zu der Bohrerlängsachse anzuordnen. Hierdurch ist eine weitgehend symmetrische Belastung des Gesteinsbohrers erreichbar.

Schließlich sieht die Erfindung vor, das Nebenschneidelement als Bestandteil eines Vollhartmetallkopfes auszubilden.

Weitere Einzelheiten der Erfindung werden in der Zeichnung anhand von schematisch dargestellten Ausführungsbeispielen beschrieben.

Hierbei zeigt:
- Figur 1:: eine Seitenansicht eines erfindungsgemäßen Gesteinsbohrers und
- Figur 2:: eine Draufsicht auf einen Bohrerkopf des in der Figur 1 gezeigten Gesteinsbohrers.

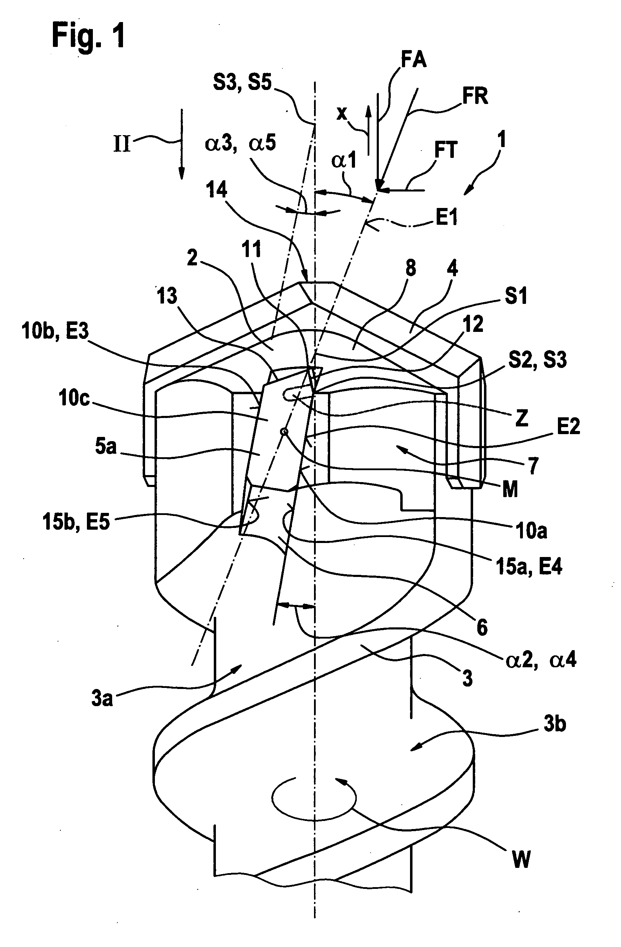

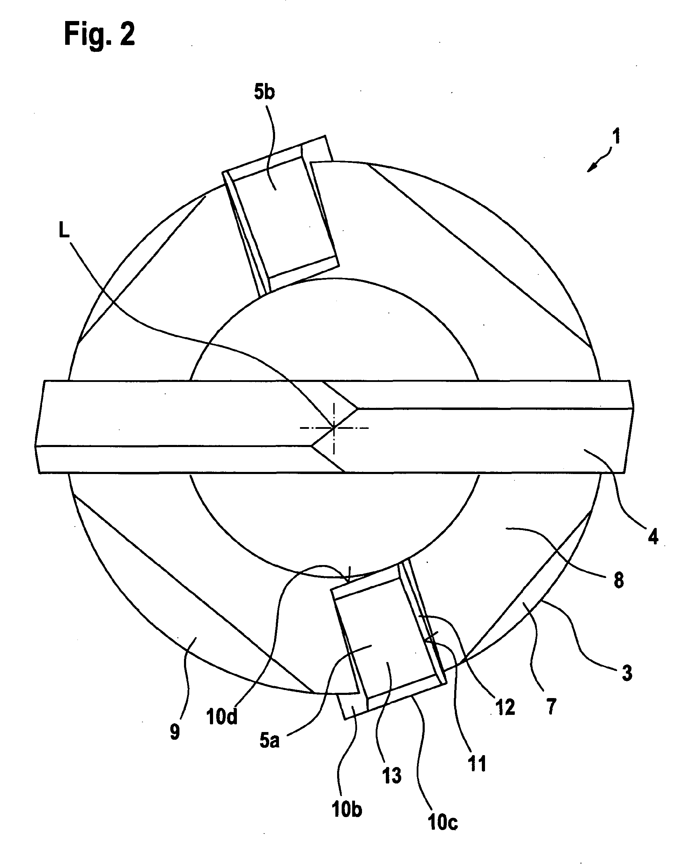

In der Figur 1 ist ein Gesteinsbohrer 1 in Seitenansicht dargestellt, wobei die Darstellung lediglich etwa eine obere Hälfte des Gesteinsbohrers 1 zeigt. Der Gesteinsbohrer 1 umfasst einen Bohrerkopf 2, eine sich an den Bohrerkopf 2 anschließende Förderwendel 3 mit zwei Förderwendelnuten 3a, 3b und einen nicht dargestellten Einspannschaft. Der Gesteinsbohrer 1 besitzt eine Bohrerlängsachse L, auf welcher der Gesteinsbohrer 1 im Betrieb einen schlagenden Vorschub in eine Vorschubrichtung x erfährt. Gleichzeitig dreht sich der Gesteinsbohrer 1 im Betrieb um die Bohrerlängsachse L in einer Drehrichtung w. Der Bohrerkopf 2 trägt ein Hauptschneidelement 4 und zwei Nebenschneidelemente 5a und 5b (siehe auch Figur 2). Das Hauptschneidelement 4 und die Nebenschneidelemente 5a und 5b sind aus Hartmetall als sogenannte Schneidplatten ausgeführt. In der Drehrichtung w ist vor dem Nebenschneidelement 5a ein erster Abfuhrkanal 7 angeordnet, über welchen nicht dargestelltes Bohrklein und/oder Bohrmehl, welches im wesentlichen von dem Nebenschneidelement 5a erzeugt wird, von einer Stirnseite 8 des Bohrerkopfes 2 in die Förderwendelnut 3a transportiert wird. In der Drehrichtung w ist hinter dem Nebenschneidelement 5a ein zweiter Abfuhrkanal 9 angeordnet, über welchen nicht dargestelltes Bohrklein und/oder Bohrmehl, welches im wesentlichen von dem Hauptschneidelement 4 erzeugt wird, von der Stirnseite 8 des Bohrerkopfes 2 in die Förderwendelnut 3a transportiert wird. Das Nebenschneidelement 5a weist eine vordere Seitenfläche 10a, eine hintere Seitenfläche 10b, eine äußere Seitenfläche 10c, eine innere Seitenfläche 10d (siehe Figur 2), eine Schneidkante 11, eine vor der Schneidkante 11 liegende Spanfläche 12 und eine hinter der Schneidkante 11 liegende Freifläche 13 auf. Weiterhin besitzt das Nebenschneidelement 5a einen Massenschwerpunkt M. Durch diesen Massenschwerpunkt M und durch die Schneidkante 11 ist eine erste Ebene E1 definiert. Diese Ebene E1 wird von der Längsmittelachse L in einem ersten Schnittpunkt S1 geschnitten, wobei der Schnittpunkt S1 bei dem vorliegenden Ausführungsbeispiel in der Vorschubrichtung x zwischen einer Bohrerspitze 14 und dem Massenschwerpunkt M des Nebenschneidelements 5a liegt. Die Bohrerlängsachse L und die Ebene E1 schneiden sich mit einem ersten Schnittwinkel α1 = 21°. Die vordere Seitenfläche 10a des Nebenschneidelements 5a definiert eine zweite Ebene E2, welche von der Bohrerlängsachse L in einem zweiten Schnittpunkte S2 geschnitten wird, wobei die Ebene E2 und die Bohrerlängsachse L in einem Schnittwinkel α2 = 10° zueinander verlaufen. Die hintere Seitenfläche 10b des Nebenschneidelements 5a definiert eine dritte Ebene E3, welche von der Bohrerlängsachse L in einem dritten Schnittpunkte S3 geschnitten wird, wobei die Ebene E3 und die Bohrerlängsachse L in einem Schnittwinkel α3 = 10° zueinander verlaufen. Seitenflanken 15a und 15b der Nut 6 definieren zwei weitere Ebenen E4 und E5, welche parallel zueinander verlaufen. Hierbei ist die Ebene E4 mit der Ebene E2 praktisch deckungsgleich und steht zu der Bohrerlängsachse L somit in einem Winkel α4 = α2 = 10°. Somit entspricht auch ein Schnittpunkt S4, in welchem sich die Ebene E4 mit der Bohrerlängsachse L schneidet, einem Schnittpunkt S2. Entsprechend ist die Ebene E5 mit der Ebene E3 praktisch deckungsgleich und steht zu der Bohrerlängsachse L somit in einem Winkel α5 = α3 = 10°. Somit entspricht auch ein Schnittpunkt S5, in welchem sich die Ebene E5 mit der Bohrerlängsachse L schneidet, einem Schnittpunkt S3. In einem drehenden und schlagenden Betrieb ist das Nebenschneidelement 5a mit seiner Ebene E1 einer resultierenden Kraft FR entgegengerichtet, welche sich aus einer axialen Kraftkomponente FA, dem sogenannten Hammerimpuls, und einer tangentialen Kraftkomponente FT zusammensetzt, welche durch die Rotation des Gesteinsbohrers erzeugt wird. Durch diese etwa frontale bzw. etwa um 180° gedrehte Ausrichtung des Nebenschneidelements 5a gegen den Kraftvektor der resultierenden Kraft FR kann das Nebenschneidelement 5a die Belastung an der Schneidkante 11 optimal aufnehmen, da der Kraftimpuls auf den Massenschwerpunkt M des Nebenschneidelements 5a gerichtet ist. Im Gegensatz zu herkömmlichen, parallel zu der Bohrerlängsachse ausgerichteten Nebenschneidelementen, welche im Hammerbohrbetrieb einer hohen Scher- bzw. Biegebelastung unterliegen, wird hierdurch ein Entstehen von Rissen in einer Zone Z wirksam vermieden, da nur eine geringe seitliche Belastung der Schlagfläche 12 erfolgt. Das Nebenschneidelement 5a arbeitet somit als schräg gestellte und mit den Seitenflächen 10a und 10b beidseitig eingebettete Schneidplatte. Für das oben erwähnte zweite Nebenschneidelement 5b des Gesteinsbohrers 1 gelten die vorstehenden Ausführungen entsprechend.

Die Figur 2 zeigt eine Draufsicht auf den in der Figur 1 gezeigten Gesteinsbohrer 1 aus einer in der Figur 1 dargestellten Pfeilrichtung II. Zur Erhaltung der Übersichtlichkeit ist nur das Nebenschneidelement 5a entsprechend der Beschreibung zur Figur 1 mit Bezugszeichen näher bezeichnet. Das Nebenschneidelement 5b ist spiegelsymmetrische zu der Bohrerlängsachse L ausgeführt.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

## Patentansprüche

1. Gesteinsbohrer (1) für drehende und schlagende Beanspruchung, mit einem Bohrerkopf (2), einer Förderwendel (3), einem Einspannschaft und einer Bohrerlängsachse (L), wobei der Bohrerkopf (2) wenigstens ein Nebenschneidelement (5a, 5b) mit einer vorderen und einer hinteren Seitenfläche (10a, 10b) aufweist, wobei das Nebenschneidelement (5a, 5b) einen Massenschwerpunkt (M) und eine Schneidkante (11) aufweist, wobei der Massenschwerpunkt (M) und die Schneidkante (11) eine erste Ebene (E1) definieren, wobei die vordere Seitenfläche (10a) des Nebenschneidelements (5a, 5b) eine zweite Ebene (E2) definiert und wobei die hintere Seitenfläche (10b) des Nebenschneidelements (5a, 5b) eine dritte Ebene (E3) definiert und wobei die zweite Ebene (E2) zur dritten Ebene (E3) parallel angeordnet ist, **dadurch gekennzeichnet, dass** die Bohrerlängsachse (L) die erste Ebene (E1) in einem ersten Schnittpunkt (S1) schneidet, dass die Bohrerlängsachse (L) die zweite Ebene (E2) und/oder die dritte Ebene (E3) in einem zweiten bzw. dritten Schnittpunkt (S2, S3) schneidet, wobei die erste Ebene (E1) und die zweite Ebene (E2) und/oder die dritte Ebene (E3) in eine Drehrichtung (w) des Gesteinsbohrers (1) geneigt ist, dass die Bohrerlängsachse (L) und die erste Ebene (E1) in Vorschubrichtung (x) des Gesteinsbohrers (1) einen ersten spitzen Winkel (α1) einschließen, dass die Bohrerlängsachse (L) und die zweite und/oder dritte Ebene (E2, E3) in der Vorschubrichtung (x) des Gesteinsbohrers (1) einen zweiten und/oder dritten spitzen Winkel (α2, α3) einschließen, dass das Nebenschneidelement (5a, 5b) in eine an dem Bohrerkopf (2) ausgebildete Nut (6) eingebetet ist, dass Seitenflanken (15a, 15b) der Nut (6) zwei weitere Ebenen (E4, E5) definieren, welche parallel zueinander verlaufen, wobei der erste Schnittpunkt (S1) zwischen einer Bohrerspitze (14) und dem Massenschwerpunkt (M) des Nebenschneidelements (5a) liegt und wobei der Winkel (α1) größer ist als der Winkel (α2).

2. Gesteinsbohrer nach Anspruch 1, **dadurch gekennzeichnet, dass** der Winkel (α1) zwischen der ersten Ebene (E1) und der Bohrerlängsachse (L) etwa 10° bis 25° beträgt.

3. Gesteinsbohrer nach einem der vorhergehenden Ansprüche, **dadurch gekennzeichnet, dass** der Winkel (α2) zwischen der zweiten Ebene (E2) und der Bohrerlängsachse (L) und somit der Winkel (α3) bzw. (α2) mit (α3=α2) etwa 5° bis 20° beträgt.

4. Gesteinsbohrer nach einem der vorhergehenden Ansprüche, **dadurch gekennzeichnet, dass** der Winkel (α1) zwischen der ersten Ebene (E1) und der Bohrerlängsachse (L) größer ist als der Winkel (α3) zwischen der dritten Ebene (E3) und der Bohrerlängsachse (L).

5. Gesteinsbohrer nach einem der vorhergehenden Ansprüche, **dadurch gekennzeichnet, dass** der erste Schnittpunkt (S1) in der Vorschubrichtung (x) des Gesteinsbohrers (1) vor dem Massenschwerpunkt (M) liegt.

6. Gesteinsbohrer nach einem der vorhergehenden Ansprüche, **dadurch gekennzeichnet, dass** der erste Schnittpunkt (S1) zwischen einer Bohrerspitze (14) und dem Massenschwerpunkt (M) liegt.

7. Gesteinsbohrer nach einem der vorhergehenden Ansprüche, **dadurch gekennzeichnet, dass** in der Drehrichtung (w) des Gesteinsbohrers (1) vor der Schneidkante (11) des Nebenschneidelements (5a, 5b) ein Abfuhrkanal (7) für Bohrmehl angeordnet ist, welcher von einer Stirnseite (8) des Bohrerkopfes (2) in die Förderwendel (3) führt.

8. Gesteinsbohrer nach einem der vorhergehenden Ansprüche, **dadurch gekennzeichnet, dass** Seitenflanken (15a, 15b) der Nut (6) eine vierte und eine fünfte Ebene (E4, E5) definieren, welche mit der Bohrerlängsachse (L) einen vierten und fünften Schnittpunkt (S4, S5) aufweisen.

9. Gesteinsbohrer nach einem der vorhergehenden Ansprüche, **dadurch gekennzeichnet, dass** die Nebenschneidelemente (5a, 5b) spiegelsymmetrisch zu der Bohrerlängsachse (L) angeordnet sind.

10. Gesteinsbohrer nach einem der vorhergehenden Ansprüche, **dadurch gekennzeichnet, dass** der Gesteinsbohrer (1) ein Hauptschneidelement (4) aufweist.

11. Gesteinsbohrer nach einem der vorhergehenden Ansprüche 1 bis 7, **dadurch gekennzeichnet, dass** das Nebenschneidelement (5a, 5b) Bestandteil eines Vollhartmetallkopfes ist.

## Claims

1. Rock drill (1) for rotary and percussive action, comprising a drill head (2), a conveying helix (3), a clamping shank and a drill longitudinal axis (L), wherein the drill head (2) has at least one secondary cutting element (5a, 5b) with a front and a rear side face (10a, 10b), wherein the secondary cutting element (5a, 5b) has a centre of mass (M) and a cutting edge (11), wherein the centre of mass (M) and the cutting edge (11) define a first plane (E1), wherein the front side face (10a) of the secondary cutting element (5a, 5b) defines a second plane (E2) and wherein the rear side face (10b) of the secondary cutting element (5a, 5b) defines a third plane (E3) and wherein the second plane (E2) is arranged parallel to the third plane (E3), **characterized in that** the drill longitudinal axis (L) intersects the first plane (E1) at a first point of intersection (S1), **in that** the drill longitudinal axis (L) intersects the second plane (E2) and/or the third plane (E3) at a second and/or third point of intersection (S2, S3), wherein the first plane (E1) and the second plane (E2) and/or the third plane (E3) are inclined in a direction of rotation (w) of the rock drill (1), **in that** the drill longitudinal axis (L) and the first plane (E1) enclose a first acute angle (α1) in the feed direction (x) of the rock drill (1), **in that** the drill longitudinal axis (L) and the second and/or third plane (E2, E3) enclose a second and/or third acute angle (α2, α3) in the feed direction (x) of the rock drill (1), **in that** the secondary cutting element (5a, 5b) is embedded in a groove (6) formed on the drill head (2), **in that** side flanks (15a, 15b) of the groove (6) define two further planes (E4, E5) which run parallel to one another, wherein the first point of intersection (S1) lies between a drill point (14) and the centre of mass (M) of the secondary cutting edge (5a) and wherein the angle (α1) is greater than the angle (α2).

2. Rock drill according to Claim 1, **characterized in that** the angle (α1) between the first plane (E1) and the drill longitudinal axis (L) is about 10° to 25°.

3. Rock drill according to either of the preceding claims, **characterized in that** the angle (α2) between the second plane (E2) and the drill longitudinal axis (L) and thus the angle (α3) or (α2) with (α3 = α2) is about 5° to 20°.

4. Rock drill according to one of the preceding claims, **characterized in that** the angle (α1) between the first plane (E1) and the drill longitudinal axis (L) is greater than the angle (α3) between the third plane (E3) and the drill longitudinal axis (L).

5. Rock drill according to one of the preceding claims, **characterized in that** the first point of intersection (S1) lies in front of the centre of mass (M) in the feed direction (x) of the rock drill (1).

6. Rock drill according to one of the preceding claims, **characterized in that** the first point of intersection (S1) lies between a drill point (14) and the centre of mass (M).

7. Rock drill according to one of the preceding claims, **characterized in that** a discharge passage (7) for drillings is arranged in front of the cutting edge (11) of the secondary cutting element (5a, 5b) in the direction of rotation (w) of the rock drill (1), said discharge passage (7) leading from an end face (8) of the drill head (2) into the conveying helix (3).

8. Rock drill according to one of the preceding claims, **characterized in that** side flanks (15a, 15b) of the groove (6) define a fourth and a fifth plane (E4, E5) which have a fourth and a fifth point of intersection (S4, S5) with the drill longitudinal axis (L).

9. Rock drill according to one of the preceding claims, **characterized in that** the secondary cutting elements (5a, 5b) are arranged in mirror symmetry relative to the drill longitudinal axis (L).

10. Rock drill according to one of the preceding claims, **characterized in that** the rock drill (1) has a main cutting element (4).

11. Rock drill according to one of the preceding claims 1 to 7, **characterized in that** the secondary cutting element (5a, 5b) is part of a solid carbide head.

## Revendications

1. Foret à pierre (1) destiné à travailler par rotation et par percussion, avec une tête de foret (2), une hélice de transport (3), une tige de serrage et un axe longitudinal de foret (L), dans lequel la tête de foret (2) présente au moins un élément de coupe secondaire (5a, 5b) avec une face latérale avant et une face latérale arrière (10a, 10b), dans lequel l'élément de coupe secondaire (5a, 5b) présente un centre de gravité massique (M) et une arête de coupe (11), dans lequel le centre de gravité massique (M) et l'arête de coupe (11) définissent un premier plan (E1), dans lequel la face latérale avant (10a) de l'élément de coupe secondaire (5a, 5b) définit un deuxième plan (E2) et dans lequel la face latérale arrière (10b) de l'élément de coupe secondaire (5a, 5b) définit un troisième plan (E3) et dans lequel le deuxième plan (E2) est disposé parallèlement au troisième plan (E3), **caractérisé en ce que** l'axe longitudinal de foret (L) coupe le premier plan (E1) en un premier point d'intersection (S1), **en ce que** l'axe longitudinal de foret (L) coupe le deuxième plan (E2) et/ou le troisième plan (E3) en un deuxième ou un troisième point d'intersection (S2, S3), dans lequel le premier plan (E1) et le deuxième plan (E2) et/ou le troisième plan (E3) est incliné dans un sens de rotation (w) du foret à pierre (1), **en ce que** l'axe longitudinal de foret (L) et le premier plan (E1) forment un premier angle aigu (α1) dans la direction d'avance (x) du foret à pierre (1), **en ce que** l'axe longitudinal de foret (L) et le deuxième plan et/ou le troisième plan (E2, E3) forment un deuxième et/ou un troisième angle aigu (α2, α3) dans la direction d'avance (x) du foret à pierre (1), **en ce que** l'élément de coupe secondaire (5a, 5b) est inséré dans une rainure (6) pratiquée sur la tête de foret (2), **en ce que** des flancs latéraux (15a, 15b) de la rainure (6) définissent deux autres plans (E4, E5), qui sont parallèles l'un à l'autre, dans lequel le premier point d'intersection (S1) est situé entre une pointe de foret (14) et le centre de gravité massique (M) de l'élément de coupe secondaire (5a) et dans lequel l'angle (α1) est plus grand que l'angle (α2).

2. Foret à pierre selon la revendication 1, **caractérisé en ce que** l'angle (α1) entre le premier plan (E1) et l'axe longitudinal de foret (L) vaut environ 10° à 25°.

3. Foret à pierre selon l'une quelconque des revendications précédentes, **caractérisé en ce que** l'angle (α2) entre le deuxième plan (E2) et l'axe longitudinal de foret (L) et ainsi l'angle (α3) ou (α2) avec (α3 = α2) vaut environ 5° à 20°.

4. Foret à pierre selon l'une quelconque des revendications précédentes, **caractérisé en ce que** l'angle (α1) entre le premier plan (E1) et l'axe longitudinal de foret (L) est plus grand que l'angle (α3) entre le troisième plan (E3) et l'axe longitudinal de foret (L).

5. Foret à pierre selon l'une quelconque des revendications précédentes, **caractérisé en ce que** le premier point d'intersection (S1) est situé avant le centre de gravité massique (M) dans la direction d'avance (x) du foret à pierre (1).

6. Foret à pierre selon l'une quelconque des revendications précédentes, **caractérisé en ce que** le premier point d'intersection (S1) est situé entre une pointe de foret (14) et le centre de gravité massique (M).

7. Foret à pierre selon l'une quelconque des revendications précédentes, **caractérisé en ce qu'**il se trouve, avant l'arête de coupe (11) de l'élément de coupe secondaire (5a, 5b) dans le sens de rotation (w) du foret à pierre (1), un canal d'évacuation (7) pour les copeaux de forage, qui conduit dans l'hélice de transport (3) à partir d'une face frontale (8) de la tête de foret (2).

8. Foret à pierre selon l'une quelconque des revendications précédentes, **caractérisé en ce que** des flancs latéraux (15a, 15b) de la rainure (6) définissent un quatrième et un cinquième plan (E4, E5), qui présentent un quatrième et un cinquième point d'intersection (S4, S5) avec l'axe longitudinal de foret (L).

9. Foret à pierre selon l'une quelconque des revendications précédentes, **caractérisé en ce que** les éléments de coupe secondaires (5a, 5b) sont disposés avec une symétrie de réflexion par rapport à l'axe longitudinal de foret (L).

10. Foret à pierre selon l'une quelconque des revendications précédentes, **caractérisé en ce que** le foret à pierre (1) présente un élément de coupe principal (4).

11. Foret à pierre selon l'une quelconque des revendications précédentes 1 à 7, **caractérisé en ce que** l'élément de coupe secondaire (5a, 5b) est un composant d'une tête en carbure massive.
